# EUROPEAN PATENT SPECIFICATION

(11) **EP 3 109 974 B1**
(45) Date of publication and mention of the grant of the patent: **01.05.2019**
(21) Application number: 16175185.4
(22) Date of filing: 20.06.2016
(51) Int. Cl.: H02K 1/32, H02K 9/04, H02K 3/52

(54) **SYSTEMS FOR IMPROVED HEAT TRANSFER FROM ROTOR COILS**
SYSTEME ZUR VERBESSERTEN WÄRMEÜBERTRAGUNG VON ROTORWICKLUNGEN
SYSTÈMES POUR AMÉLIORER LE TRANSFERT DE CHALEUR DEPUIS LES BOBINES DE ROTOR

(30) Priority: 25.06.2015 US 201514749790
(43) Date of publication of application: 28.12.2016
(73) Proprietor: GE Energy Power Conversion Technology Ltd, Rugby Warwickshire CV21 1BU (GB)
(72) Inventor: DEBLOCK, Mark John, Peterborough, Ontario K9J 7B5 (CA)
(74) Representative: Serjeants LLP

(56) References cited:
- EP-A1- 0 853 370
- EP-A2- 2 031 733
- DE-A1-102004 062 162
- GB-A- 845 750
- US-A1- 2005 023 924

## Description

### TECHNICAL FIELD

The technical field relates generally to rotors.

### BACKGROUND

Industry standards limit the rotor winding temperatures. Furthermore, the insulating materials in the rotor have temperature limitations. Exceeding the temperature limits in an insulated winding can lead to premature failure.

It may be desirable to provide direct cooling air to the rotor to improve the thermal performance.

GB 845750 describes an electrical machine that includes a trough-shaped baffle located in the interpole region. Leading edge deflectors pick up some of the cooling air from the general air stream through the machine and direct the air radially inwards between the baffle and the leading field coil. The air then passes radially outwards between the baffle and the trailing field coil and is directed back into the general air stream by means of trailing edge deflectors.

### SUMMARY

A device according to independent claim 1 provides direct cooling air to rotor coils to improve the thermal performance of the rotor. By improving the ventilation of the rotor, higher power densities can be achieved resulting in a more cost effective product which meets industry standards and material limits.

The present invention provides a coil support assembly according to claim 1 and configured to be disposed in an interpole region of a rotor.

Optional features of the coil support assembly are defined in the subclaims.

### DESCRIPTION OF THE DRAWINGS

FIG. 1 is a perspective view of a rotor according to the present invention.
FIG. 2 is a cross-sectional end view of the rotor of FIG. 1.
FIG. 3 is an exploded perspective view of the rotor of FIG. 1 including a coil support assembly and an air guide.
FIG. 4 is a partial perspective view of the rotor of FIG. 1
FIG. 5 is a perspective view of an upper support wedge of the coil support assembly and the air guide of FIG. 3.
FIG. 6 is a perspective view of an upper support wedge of the coil support assembly and the air guide of FIG. 3.
FIG. 7 is a perspective view of a scoop of the air guide of FIG. 3.
FIG. 8 is a partial cross-sectional perspective view of the rotor of FIG. 3.
FIG. 9 is a partial cross-sectional end view of the rotor of FIG. 3.
FIG. 10 is a perspective view of a rotor that does not form part of the present invention.
FIG. 11 is a partial cross-sectional end view of the rotor of FIG. 10.
FIG. 12 is a partial cross-sectional end view of a rotor, according to the present invention.
FIG. 13 is a partial cross-sectional end view of a rotor, according to the present invention.
FIG. 14 is a partial cross-sectional end view of a rotor that does not form part of the present invention.

The drawings are only for purposes of illustrating preferred embodiments and are not to be construed as limiting the disclosure. Given the following enabling description of the drawings, the novel aspects of the present disclosure should become evident to a person of ordinary skill in the art. This detailed description uses numerical and letter designations to refer to features in the drawings. Like or similar designations in the drawings and description have been used to refer to like or similar parts of embodiments.

### DETAILED DESCRIPTION OF THE EMBODIMENTS

As required, detailed embodiments are disclosed herein. It must be understood that the disclosed embodiments are merely exemplary of various and alternative forms. As used herein, the word "exemplary" is used expansively to refer to embodiments that serve as illustrations, specimens, models, or patterns. The figures are not necessarily to scale and some features may be exaggerated or minimized to show details of particular components. In other instances, well-known components, systems, materials, or methods that are known to those having ordinary skill in the art have not been described in detail in order to avoid obscuring the present disclosure. Therefore, specific structural and functional details disclosed herein are not to be interpreted as limiting, but merely as a basis for the claims and as a representative basis for teaching one skilled in the art.

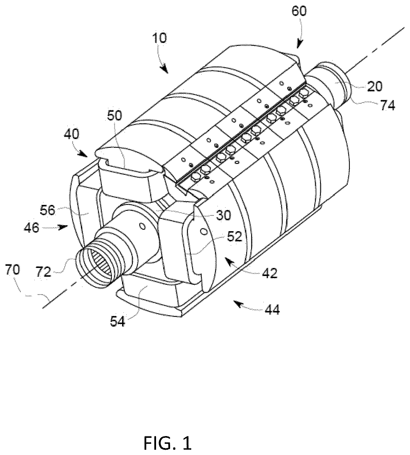

Referring to FIGS. 1-3, a generator rotor 10 that is used, for example, in a generator system is illustrated. However, the teachings of the disclosure are also applicable to other systems including motors, generators, and condensers. The generator rotor 10 includes a shaft assembly 20, a spider 30, poles 40, 42, 44, 46, and coils 50, 52, 54, 56. The shaft assembly 20 extends through the generator rotor 10 along a longitudinal axis 70. The shaft includes a first end 72 and a second end 74. The first end 72 is a drive end that is configured to be coupled to a prime mover such as a gas turbine engine, compressor, or steel mill. The spider 30 is a portion of the rotor 10 that surrounds the shaft assembly 20. The poles 40, 42, 44, 46 extend radially away from the spider 30 and shaft assembly 20.

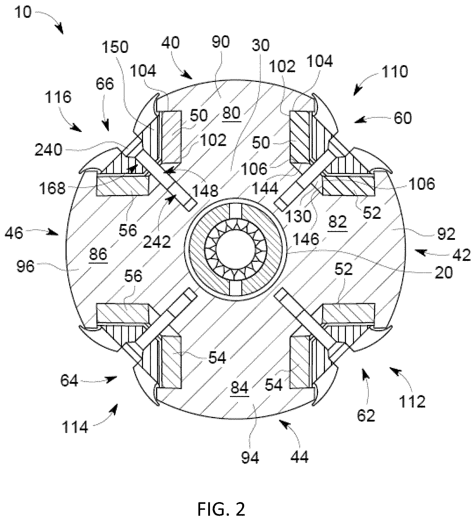

Referring to FIG. 2, each of the poles 40, 42, 44, 46 includes a medial portion 80, 82, 84, 86 and a tip 90, 92, 94, 96. The tip 90, 92, 94, 96 is at a distal end of a respective one of the medial portions 80, 82, 84, 86.

The poles 40, 42, 44, 46 and are spaced evenly apart from one another. Those skilled in the art would understand, however, that rotors having other design configurations may be employed. For example, the rotor may have a fewer or greater number of poles. In various embodiments, the rotors may include poles that are evenly spaced or a combination thereof. An interpole region 110, 112, 114, 116 is an open area between adjacent ones of the poles 40, 42, 44, 46.

Referring to FIG. 2, coil support assemblies 60, 62, 64, 66 are positioned within each of the interpole regions 110, 112, 114, 116 to support the coils 50, 52, 54, 56 in tangential and radial directions. The pole tip 90, 92, 94, 96 supports the coils 50, 52, 54, 56 in the radial direction.

A lower support wedge 130 is disposed in the interpole region 110 such that a first side surface 144 contacts a proximal edge 106 of the coil 50 and a second side surface 146 contacts a proximal edge 106 of the coil 52.

Threaded fasteners 240 are inserted through openings 168, inserted through the openings 148, and tightened into threaded openings 242 to secure a lower support wedge 130 and an upper support wedge 150 to the spider 30. The lower support wedge 130 and the upper support wedge 150 improve the strength and reliability of the coils and minimize rotor imbalance that may occur from movement of the coils.

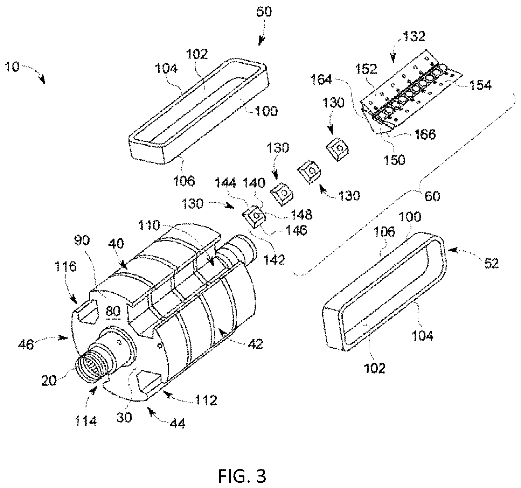

Referring to FIG. 3, the coil 50 is described in further detail. The coils 50, 52, 54, 56 are substantially the same and the description of the coil 50 is applicable to the coils 52, 54, 56.

The coil 50 includes an outside surface 100, an inside surface 102, a distal edge 104, and a proximal edge 106. The coil 50 is wrapped around the medial portion 80 of the pole 40. For example, the coil 50 is formed by wrapping numerous individual wire windings around the medial portion 80 of the pole 40. The wire windings may be various materials including copper. Alternatively, the coil is formed by fabricating strips of copper around the medial portion of the pole.

The outside surface 100 is formed from the outermost layer of wire windings of the coil 50. The inside surface 102 is formed from the innermost layer of wire windings of the coil 50. The inside surface 102 of the coil 50 is in contact with the medial portion 80 of the pole 40. The distal edge 104 of the coil 50 is substantially in contact with the tip 90 of the pole 40.

The coil support assembly 60 is described in further detail. The coil support assemblies 62, 64, 66 are substantially similar to the coil support assembly 60 and the description of the coil support assembly 60 is applicable thereto.

The coil support assembly 60 is disposed in the interpole region 110 between the pole 40 and the pole 42. The coil support assembly 60 includes lower support wedges 130 and an upper support wedge 150.

Each of the lower support wedges 130 includes a body that has a substantially trapezoidal-shaped cross section. The lower support wedge 130 includes a distal surface 140, a proximal surfaces 142, a first side surface 144, and a second side surface 146. Openings 148 extend between the distal surface 140 and the proximal surface 142.

The upper support wedge 150 is disposed in the interpole region 110 such that the first side surface 164 contacts the outside surface 100 of the coil 50 and the second side surface 166 contacts the outside surface 100 of the coil 52.

An air guide 132 is configured to provide air flow across the coils 50, 52 to transfer heat from the coils 50, 52. The air guide 132 includes the upper support wedge 150, an upstream scoop 152, and a downstream scoop 154. The upper support wedge 150 provides support to the coils 50, 52 and facilitates heat transfer from the coils 50, 52.

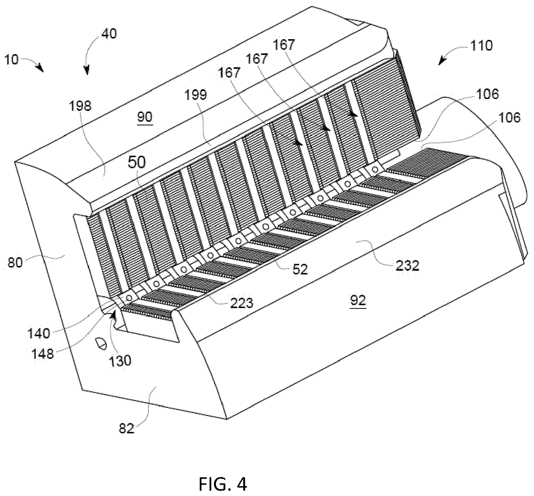

Referring to FIG. 4, the lower support wedges 130 are spaced apart to allow air flow. Insulators 167 are positioned on the coils 50, 52 to separate the upper support wedge 150 and the coils 50, 52.

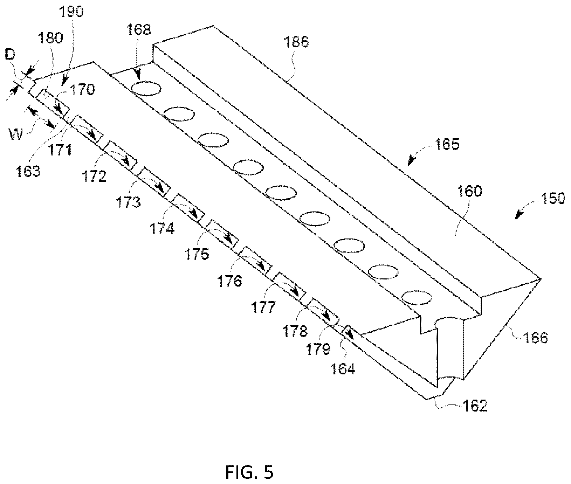

Referring to FIG. 5, the upper support wedge 150 has a substantially trapezoidal-shaped cross section. The upper support wedge 150 includes a distal surface 160, a proximal surface 162, a first side surface 164, and a second side surface 166. A first chamfered surface 163 is between distal surface 160 and the first side surface 164. A second chamfered surface 165 is between the distal surface 160 and the second side surface 166.

Openings 168 extend between the distal surface 160 and the proximal surface 162. The upper support wedge 150 includes channels 170, 171, 172, 173, 174, 175, 176, 177, 178, 179. The channel 170 is described in further detail. The channels 171, 172, 173, 174, 175, 176, 177, 178, 179 are substantially similar to the channel 170 and the description of the channel 170 is applicable thereto.

The channel 170 is formed in a portion of the upper support wedge 150 including that which is adjacent to the coils 50, 52. For example, this portion of the upper support wedge 150 may be referred to as the inside or underside of the upper support wedge 150 or that which interfaces with the surfaces defining the interpole region 110. The depth D of the channel 170 is substantially the width of the first chamfered surface 163. The channel 170 has a width W.

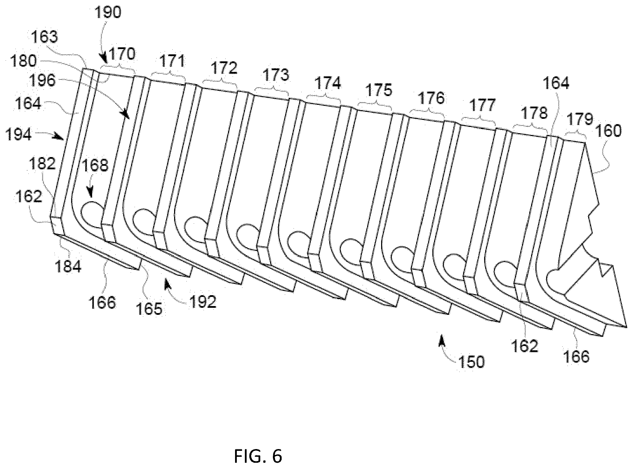

Referring to FIG. 6, the channel 170 is formed in the first side surface 164, the proximal surface 162, and the second side surface 166. The channel 170 extends from an upstream edge 180 of the distal surface 160 across the first side surface 164 to an upstream edge 182 of the proximal surface 162; across the proximal surface 162 to a downstream edge 184 of the proximal surface 162; and from the downstream edge 184 of the proximal surface 162 across the second side surface 166 to a downstream edge 186 of the distal surface 160.

The channel 170 includes an upstream open end 190 formed in the first chamfered surface 163 and a downstream open end 192 formed in the second chamfered surface 165. The channel 170 is substantially parallel to a plane that is perpendicular to the longitudinal axis of the rotor 10. The channels define dividing sections between the channels. Dividers 194, 196 on opposite sides of the channel 170 are indicated in FIG. 6.

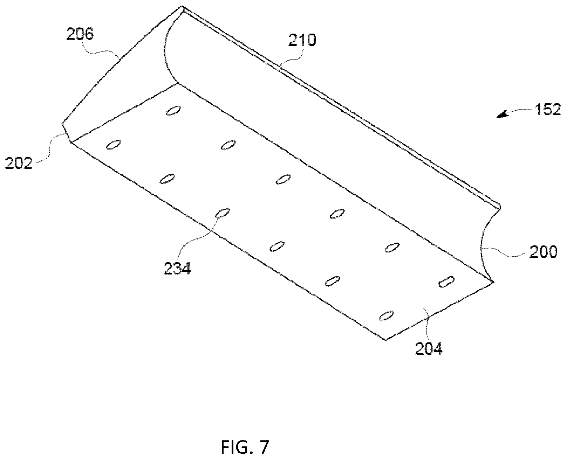

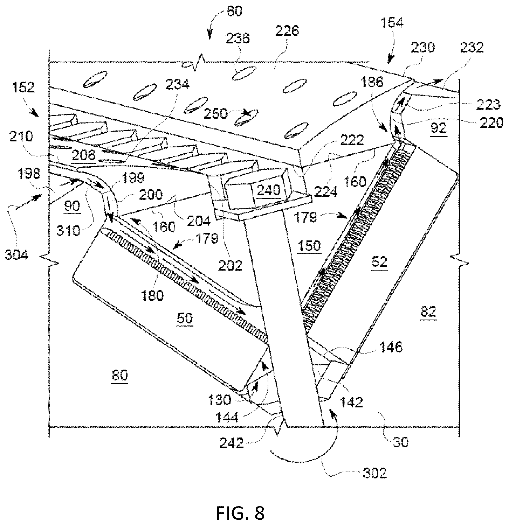

Referring to FIG. 7, the upstream scoop 152 includes a curved surface 200 that tapers to an inner surface 202. The curved surface 200 is configured to curve around the downstream end 199 of the tip 90 (FIG. 8). A proximal surface 204 of the upstream scoop 152 is configured to interface with the distal surface 160 (FIG. 8) of the upper support wedge 150. A distal surface 206 of the upstream scoop 152 is slanted for purposes of aerodynamics. The distal surface 206 is designed to allow the air to expand gradually and thereby reduce drag loss and air separation.

Referring to FIG. 8, the upstream scoop 152 is attached to the upper support wedge 150 adjacent the upstream edge 180. The upstream scoop 152 is configured to direct air that flows over a distal surface 198 of the tip 90 around the downstream end 199 of the tip 90 and into the channels. For purposes of clarity, in FIGS. 8, 9, 12 and 13, channels are described as a group but represented by a single channel 179.

The downstream scoop 154 is attached to the upper support wedge 150 adjacent the downstream edge 186. The downstream scoop 154 is configured draw air that flows through the channels 179 out of the channels 179. The downstream scoop 154 is a mirror image of the upstream scoop 152 and includes a curved surface 220 that tapers to an inner surface 222. The curved surface 220 is configured to curve around an upstream end 223 of the tip 92.

A proximal surface 224 of the downstream scoop 154 is configured to interface with the distal surface 160 of the upper support wedge 150. A distal surface 226 of the downstream scoop 154 is slanted for purposes of aerodynamics. The distal surface 226 is designed to allow the air to contract gradually and thereby reduce drag loss and air separation.

In alternative embodiments, the scoops 152, 154 are not mirror images of one another. For example, in certain embodiments, the distal surface are differently shaped in order to optimize expansion and contraction of air traveling over the surfaces.

The upstream scoop 152 includes openings 234, and the downstream scoop 154 includes openings 236. Threaded fasteners (e.g., represented by numeral 250) are inserted through the openings 234, 236 and tightened into the threaded apertures (not shown) in the upper support wedge 150 to secure the upstream scoop 152 and the downstream scoop 154 to the upper support wedge 150. Alternatively, the scoops 152, 154 are integral to the upper support wedge 150.

According to an exemplary method, the rotor 10 rotates in a counterclockwise direction 302. This rotation generates air flow in the direction 304. The air flow moves in the direction 304 along the distal surface of the tip 90 until it encounters the upstream edge 210 of the upstream scoop 152. Air that is traveling near the distal surface 198 enters the space between the distal surface 198 and the curved surface 200.

The upstream scoop 152 directs part of the air flow along a path 310 that leads from the opening at the upstream scoop 152, through the channels 179, to an exit at the downstream edge 230 of the downstream scoop 154. Air that is traveling in the channels 179 is drawn out of the channels 179 and exits the channels 179 between the distal surface 232 of the tip 92 and the curved surface 220. Air is drawn out of the channels 179 because of the Venturi effect. For example, air flow across the distal surface 226 and over the downstream edge 230 creates a low pressure at the opening between the tip 92 and the downstream scoop 154. The low pressure increases air flow through the channels 179.

The path 310 is across the outside surface of the coils 50, 52. When air moves across the coils 50, 52, heat is transferred from the coils 50, 52 to the air. The hot air leaves the coils 50, 52 and the coils 50, 52 are cooled. In this way, the thermal performance of the rotor 10 is improved. By improving the ventilation of the rotor 10, higher power densities can be achieved resulting in a more cost effective product which meets industry standards and material limits.

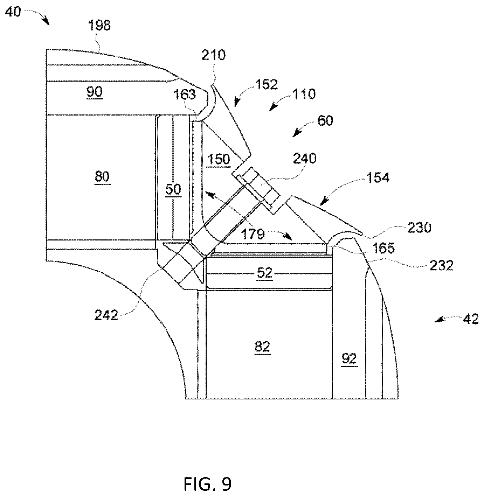

Referring to FIG. 9, an upstream edge 210 of the curved surface 200 (FIG. 8) extends radially outside or above the distal surface 198 of the tip 90. A downstream edge 230 of the curved surface 220 (FIG. 8) extends radially outside or above a distal surface 232 of the tip 92.

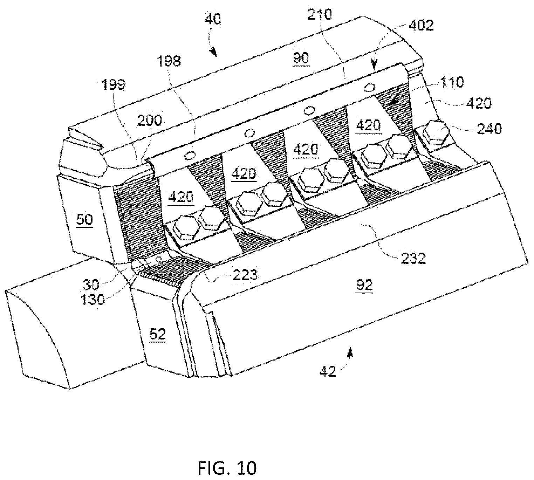

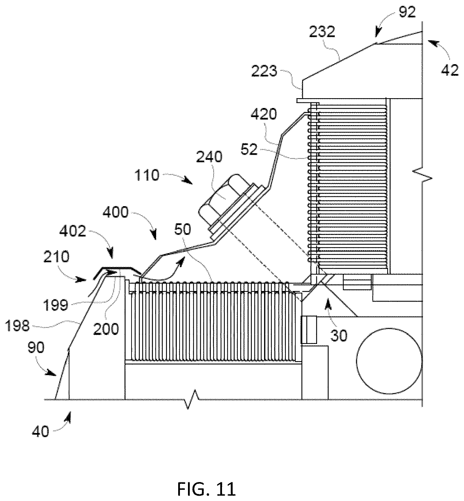

Referring to FIGS. 10 and 11, a coil support assembly 400 and an air guide 402 for the rotor 10 that does not form part of the claimed invention is described.

The coil support assembly 400 includes lower support wedges 130 and coil brackets 420. Threaded fasteners 240 are inserted through the openings in the lower support wedges 130 and coil brackets 420 and tightened into threaded openings to secure the lower support wedge 130 and the coil brackets 420 to the spider 30. The lower support wedge 130 and the coil brackets 420 improve the strength and reliability of the coils 50, 52 and minimize rotor imbalance that may occur from movement of the coils 50, 52.

The air guide 402 is attached to the downstream end 199 of the tip 90. The air guide 402 is a scoop that is configured to direct air that flows over the distal surface 198 of the tip 90 around the downstream end 199 of the tip 90 and into the interpole region 110 near the coil 50.

The air guide 402 includes a curved surface 200 that is configured to curve around the downstream end 199 of the tip 90. An upstream edge 210 of the curved surface 200 extends radially outside or above the distal surface 198 of the tip 90. Air that is traveling near the distal surface 198 enters the space between the distal surface 198 and the curved surface 200.

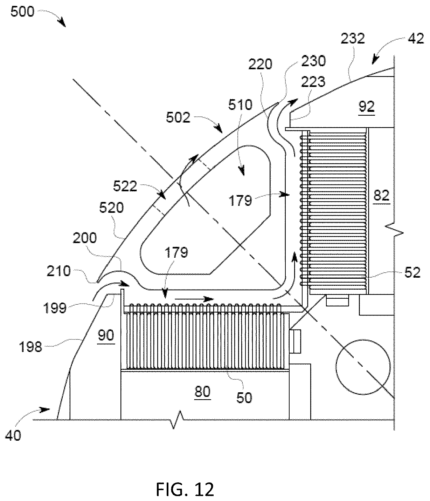

Referring to FIG. 12, an exemplary embodiment of a coil support assembly 500 including an air guide 502 for the rotor 10 is described. The coil support assembly 500 is substantially similar to the coil support assembly 60 (FIG. 3), and the air guide 502 is substantially similar to the air guide 132 (FIG. 3). Like numerals are used to indicate like elements and, for clarity, only differences are described in detail.

The coil support assembly 500 and air guide 502 is a one-piece construction (e.g., scoops are integral to an upper support wedge). The body of the coil support assembly 500 includes a hollow interior 510 to reduce the weight of the coil support assembly 500. A distal surface 520 of the coil support assembly includes an opening 522 to allow for air to flow in and out of the hollow interior 510.

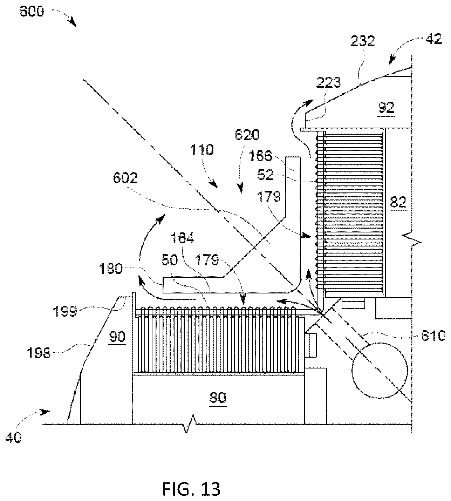

Referring to FIG. 13, an exemplary embodiment of a coil support assembly 600 and an air guide 602 for the rotor 10 is described. In this embodiment, the rotor 10 includes an air passage 610 that extends through the spider 30 into the interpole region 110. For example, the air passage 610 is at the innermost part of the interpole region 110.

The coil support assembly 600 and the air guide 602 includes features of the upper support wedge 150 (FIGS. 3 and 5). The air guide 602 includes channels 179. The channels 179 are formed in a portion of the coil support assembly 600 that is adjacent to the coils 50, 52. For example, this portion of the coil support assembly 600 may be referred to as the inside or underside of the main body or that which interfaces with the surfaces defining the interpole region 110.

Here, the channel 179 is formed in the first side surface 164 and the second side surface 166. The first side surface 164 extends from the air passage 610 substantially to the downstream end 199 of the tip 90 and the second side surface 166 extends from the air passage 610 substantially to the upstream end 223 of the tip 92.

The coil support assembly 600 and air guide 602 includes a cutout portion 620 to reduce the weight of the coil support assembly 600 and air guide 602.

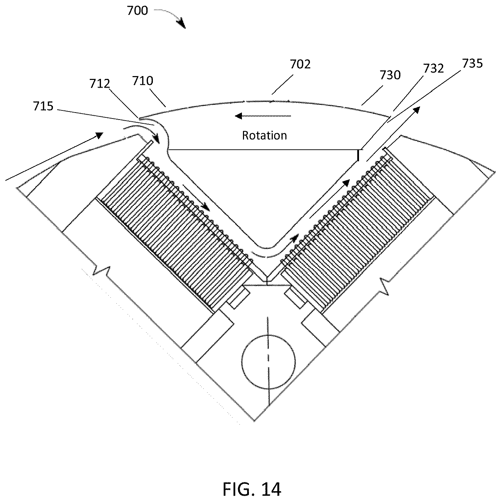

Referring to FIG. 14, an alternative embodiment of a coil support assembly 700 and a scoop 702 for the rotor 10 that does not form part of the present invention is described. The scoop 702 includes and upstream (i.e., inlet) side 710 and a downstream (i.e., discharge) side 730. The inlet 710 includes an upstream edge 712 and an upstream surface 715. The discharge side 730 includes a downstream edge 732 and a downstream surface 735. As depicted in FIG. 14, the geometry of the discharge side 730 has been changed to facilitate air entry into the stator (not shown). As depicted in the scoop 702, the geometry of the inlet side 710 is not required to match the geometry of the discharge side 730.

## Claims

1. A coil support assembly (60) configured to be disposed in an interpole region (110) of a rotor (10);
the rotor (10) comprising an upstream pole and a downstream pole;
the upstream pole including an upstream medial portion (80), an upstream coil (50) surrounding the upstream medial portion (80), and an upstream tip (90);
the downstream pole including a downstream medial portion (82), a downstream coil (52) surrounding the downstream medial portion (82), and a downstream tip (92);
an interpole region positioned between the upstream pole and the downstream pole;
wherein an air stream is provided in a circumferential direction around the rotor (10) caused by the rotation thereof;
the coil support assembly comprising:
an upper support wedge (150), including:
an upstream surface (164) positionable adjacent an upstream coil (50) of the rotor (10);
a downstream surface (166) positionable adjacent a downstream coil (52) of the rotor (10);
a channel (170) formed in radial direction along the upstream surface (164) and further in radial direction along the downstream surface (166) of the wedge (150); and
an upstream scoop (152) attached to the wedge (150) and positionable adjacent a downstream end of an upstream tip (90) of the rotor (10), wherein the upstream scoop (152) is configured to direct air flow around the downstream end of the upstream tip (90) and into the channel (170).

2. A coil support assembly (60) according to claim 1, wherein the upstream scoop (152) comprises:
an upstream edge (210) positioned or positionable radially outside of a surface of the upstream tip (90); and
a directing surface (200) that is configured to direct air flow around the downstream end of the upstream tip (90) from the upstream edge (210) to the interpole region (110) or the channel (170).

3. A coil support assembly (60) according to claim 1 or claim 2, wherein the upper support wedge (150) is configured to provide tangential support to the upstream coil (50) and to the downstream coil (52).

4. A coil support assembly (60) according to any preceding claim, wherein the upstream scoop (152) is attached to or integral to the upper support wedge (150).

5. A coil support assembly (60) according to any preceding claim, further comprising a downstream scoop (154) positioned or positionable adjacent an upstream end of a downstream tip (92) of the rotor (10), wherein the downstream scoop (154) is configured to direct air flow out of the interpole region (110) or the channel (170) and around the upstream end of the downstream tip (92).

6. A coil support assembly (60) according to claim 5, wherein the downstream scoop (154) comprises:
a downstream edge (230) positioned or positionable radially outside of a surface of the downstream tip (92); and
a directing surface (220) that is configured to direct air flow around the upstream end of the downstream tip from the interpole region (110) or the channel (170) to the downstream edge (230).

7. A coil support assembly (60) according to claim 5 or claim 6, wherein the downstream scoop (154) is attached to or integral to the upper support wedge (150).

8. A coil support assembly (60) according to claim 1, further comprising a plurality of channels (170-179) formed in the upstream surface (164) and the downstream surface (166) of the upper support wedge (150), the upstream scoop (152) being further configured to direct air flow into the plurality of channels (170-179).

## Patentansprüche

1. Spulenträgeranordnung (60), die eingerichtet ist, um in einem Zwischenpolbereich (110) eines Rotors (10) angeordnet zu sein;
wobei der Rotor (10) einen stromaufwärtigen Pol und einen stromabwärtigen Pol aufweist;
wobei der stromaufwärtige Pol einen stromaufwärtigen Mittelabschnitt (80), eine stromaufwärtige Spule (50), die den stromaufwärtigen Mittelabschnitt (80) umgibt, und eine stromaufwärtige Spitze (90) enthält;
wobei der stromabwärtige Pol einen stromabwärtigen Mittelabschnitt (82), eine stromabwärtige Spule (52), die den stromabwärtigen Mittelabschnitt (82) umgibt, und eine stromabwärtige Spitze (92) enthält;
wobei ein Zwischenpolbereich zwischen dem stromaufwärtigen Pol und dem stromabwärtigen Pol angeordnet ist;
wobei ein Luftstrom in einer Umfangsrichtung um den Rotor (10) herum bereitgestellt wird, der durch dessen Drehung hervorgerufen ist;
wobei die Spulenträgeranordnung aufweist:
einen oberen Stützkeil (150) der enthält:
eine stromaufwärtige Fläche (164), die benachbart zu einer stromaufwärtigen Spule (50) des Rotors (10) positionierbar ist;
eine stromabwärtige Fläche (166), die benachbart zu einer stromabwärtigen Spule (52) des Rotors (10) positionierbar ist;
einen Kanal (170), der in radialer Richtung entlang der stromaufwärtigen Fläche (164) und ferner in radialer Richtung entlang der stromabwärtigen Fläche (166) des Keils (150) ausgebildet ist; und
eine stromaufwärtige Schaufel (152), die an dem Keil (150) angebracht und benachbart zu einem stromabwärtigen Ende einer stromaufwärtigen Spitze (90) des Rotors (10) positionierbar ist, wobei die stromaufwärtige Schaufel (152) eingerichtet ist, um eine Luftströmung um das stromabwärtige Ende der stromaufwärtigen Spitze (90) herum und in den Kanal (170) hinein zu leiten.

2. Spulenträgeranordnung (60) nach Anspruch 1, wobei die stromaufwärtige Schaufel (152) aufweist:
eine stromaufwärtige Kante (210), die radial außerhalb einer Oberfläche der stromaufwärtigen Spitze (90) positioniert oder positionierbar ist; und
eine Leitfläche (200), die eingerichtet ist, um eine Luftströmung um das stromabwärtige Ende der stromaufwärtigen Spitze (90) herum von der stromaufwärtigen Kante (210) zu dem Zwischenpolbereich (110) oder dem Kanal (170) zu leiten.

3. Spulenträgeranordnung (60) nach Anspruch 1 oder Anspruch 2, wobei der obere Stützkeil (150) eingerichtet ist, um eine tangentiale Abstützung für die stromaufwärtige Spule (50) und für die stromabwärtige Spule (52) zu schaffen.

4. Spulenträgeranordnung (60) nach einem beliebigen vorhergehenden Anspruch, wobei die stromaufwärtige Schaufel (152) an dem oberen Stützkeil (150) angebracht oder mit diesem integral ausgebildet ist.

5. Spulenträgeranordnung (60) nach einem beliebigen vorhergehenden Anspruch, die ferner eine stromabwärtige Schaufel (154) aufweist, die benachbart zu einem stromaufwärtigen Ende einer stromabwärtigen Spitze (92) des Rotors (10) positioniert oder positionierbar ist, wobei die stromabwärtige Schaufel (154) eingerichtet ist, um eine Luftströmung aus dem Zwischenpolbereich (110) oder dem Kanal (170) heraus und um das stromaufwärtige Ende der stromabwärtigen Spitze (92) herum zu leiten.

6. Spulenträgeranordnung (60) nach Anspruch 5, wobei die stromabwärtige Schaufel (154) aufweist:
eine stromabwärtige Kante (230), die radial außerhalb einer Oberfläche der stromabwärtigen Spitze (92) positioniert oder positionierbar ist; und
eine Leitfläche (220), die eingerichtet ist, um eine Luftströmung um das stromaufwärtige Ende der stromabwärtigen Spitze herum von dem Zwischenpolbereich (110) oder dem Kanal (170) zu der stromabwärtigen Kante (230) zu leiten.

7. Spulenträgeranordnung (60) nach Anspruch 5 oder Anspruch 6, wobei die stromabwärtige Schaufel (154) an dem oberen Stützkeil (150) angebracht oder mit diesem integral ausgebildet ist.

8. Spulenträgeranordnung (60) nach Anspruch 1, die ferner mehrere Kanäle (170-179) aufweist, die in der stromaufwärtigen Fläche (164) und der stromabwärtigen Fläche (166) des oberen Stützkeils (150) ausgebildet sind, wobei die stromaufwärtige Schaufel (152) ferner eingerichtet ist, um eine Luftströmung in die mehreren Kanäle (170-179) hinein zu leiten.

## Revendications

1. Ensemble de support de bobine (60) configuré pour être disposé dans une région entre pôles (110) d'un rotor (10),
le rotor (10) comprenant un pôle amont et un pôle aval ;
le pôle amont comportant une partie amont médiane (80), une bobine amont (50) entourant la partie amont médiane (80), et une partie terminale amont (90) ;
le pôle aval comportant une partie aval médiane (82), une bobine aval (52) entourant la partie aval médiane (82), et une partie terminale aval (92) ;
une région entre pôles placée entre le pôle amont et le pôle aval ;
sachant qu'un courant d'air est créé dans une direction circonférentielle autour du rotor (10) et est généré par la rotation de celui-ci ;
l'ensemble de support de bobine comprenant :
une cale de support supérieure (150) comportant :
une surface amont (164) pouvant être positionnée de façon adjacente à une bobine amont (50) du rotor (10) ;
une surface aval (166) pouvant être positionnée de façon adjacente à une bobine aval (52) du rotor (10) ;
un canal (170) formé dans la direction radiale le long de la surface amont (164) et également dans la direction radiale le long de la surface aval (166) de la cale (150) ; et
un volet amont (152) fixé à la cale (150) et pouvant être positionné de façon adjacente à une extrémité aval d'une partie terminale amont (90) du rotor (10), le volet amont (152) étant configuré pour diriger le flux d'air autour de l'extrémité aval de la partie terminale amont (90), et dans le canal (170).

2. Ensemble de support de bobine (60) selon la revendication 1, dans lequel le volet amont (152) comprend :
un bord amont (210) positionné ou pouvant être positionné radialement à l'extérieur d'une surface de la partie terminale amont (90) ; et
une surface de guidage (200) qui est configurée pour diriger le flux d'air autour de l'extrémité aval de la partie terminale amont (90), depuis le bord amont (210) jusqu'à la région entre pôles (110) ou jusqu'au canal (170).

3. Ensemble de support de bobine (60) selon la revendication 1 ou la revendication 2, dans lequel la cale de support supérieure (150) est configurée pour assurer un support tangentiel à la bobine amont (50) et à la bobine aval (52).

4. Ensemble de support de bobine (60) selon l'une quelconque des revendications précédentes, dans lequel le volet amont (152) est fixé à la cale de support supérieure (150) ou fait partie intégrante de celle-ci.

5. Ensemble de support de bobine (60) selon l'une quelconque des revendications précédentes, comprenant en outre un volet aval (154) positionné ou pouvant être positionné de façon adjacente à une extrémité amont d'une partie terminale aval (92) du rotor (10), le volet aval (154) étant configuré pour diriger le flux d'air hors de la région entre pôles (110) ou du canal (170) et autour de l'extrémité amont de la partie terminale aval (92).

6. Ensemble de support de bobine (60) selon la revendication 5, dans lequel le volet aval (154) comprend :
un bord aval (230) positionné ou pouvant être positionné radialement à l'extérieur d'une surface de la partie terminale aval (92) ; et
une surface de guidage (220) qui est configurée pour diriger le flux d'air autour de l'extrémité amont de la partie terminale aval, depuis la région entre pôles (110) ou depuis le canal (170), jusqu'au bord aval (230).

7. Ensemble de support de bobine (60) selon la revendication 5 ou la revendication 6, dans lequel le volet aval (154) est fixé à la cale de support supérieure (150) ou fait partie intégrante de celle-ci.

8. Ensemble de support de bobine (60) selon la revendication 1, comprenant en outre une pluralité de canaux (170 à 179) formés dans la surface amont (164) et la surface aval (166) de la cale de support supérieure (150), le volet amont (152) étant en outre configuré pour diriger le flux d'air dans la pluralité de canaux (170 à 179).
